# EUROPÄISCHE PATENTSCHRIFT

(11) **EP 0 629 429 B1**
(45) Veröffentlichungstag und Bekanntmachung des Hinweises auf die Patenterteilung: **29.04.1998**
(21) Anmeldenummer: 94108600.1
(22) Anmeldetag: 06.06.1994
(51) Int. Cl.: B01D 53/34, A62D 3/00, B09B 3/00

(54) **Verfahren zur thermischen Behandlung von Feststoffen, die bei der Reinigung von Rauchgasen anfallen**
Process for the thermal treatment of solids separated during the purification of exhaust gases
Procédé pour le traitement thermique des solides separés pendant la purification des effluents gazeux

(30) Priorität: 17.06.1993 CH 1804/93
(43) Veröffentlichungstag der Anmeldung: 21.12.1994
(73) Patentinhaber: Von Roll Umwelttechnik AG, 8005 Zürich (CH)
(72) Erfinder: Wanger, Harald, CH-5200 Brugg (CH); Rüegg, Hans, CH-5610 Wohlen (CH)
(74) Vertreter: Patentanwälte Schaad, Balass, Menzl & Partner AG

(56) Entgegenhaltungen:
- EP-A- 0 476 727
- DE-A- 3 703 984
- DE-A- 3 744 287
- DE-A- 3 802 884
- US-A- 5 005 495

## Beschreibung

Die Erfindung betrifft ein Verfahren zur thermischen Behandlung von staubförmigen und/oder feinteiligen Feststoffen, die bei der Reinigung von Rauchgasen anfallen.

Es ist bekannt, dass sich bei der Müllverbrennung in Gegenwart von Sauerstoffüberschuss polychlorierte Kohlenwasserstoffe bilden. So berichteten Olie, K. et al. in Chemosphere 1977, 6, 455 über polychlorierte Dibenzodioxine (PCDD) und polychlorierte Dibenzofurane (PCDF) in Stäuben von Elektrofiltern von Hausmüllverbrennungsanlagen.

Hagenmaier, H. et al. in Environ. Sci. & Technol 1987, 21, 1080 beschreiben, dass die Limitierung von Sauerstoff, bei der katalytischen Dechlorierung bei 300 bis 400°C zur weitgehenden Zerstörung von PCDD und PCDF führt.

Diese Erkenntnis macht sich die in der DE-A 37 03 984 beschriebene Einrichtung zur Zerstörung halogenierter Aromate zunutze. Die thermische Behandlung findet hier in einem nicht-durchströmten, von der Aussenatmosphäre abgeschlossenen Trommel statt. Die zu behandelnde Flugasche wird mittels auf einer drehbaren Welle gelagerter Schaufeln, in achsialer und radialer Richtung durch die Trommel transportiert. Dabei wird das transportierte Material verdichtet und der Trommelaustritt wird in der Folge von Zeit zu Zeit verstopft, was zu Betriebsunterbrüchen führt. Die Abdichtung der Trommel, insbesondere der Lager, ist problematisch. Der Sauerstoff, in der infolge Undichtheit eintretenden Luft, führt zur Umkehrreaktion, d.h. zur Neubildung der zu zerstörenden chlorierten Kohlenwasserstoffe. Die für die Behandlung der Flugasche erforderliche Wärme wird bei diesem bekannten Verfahren über die Trommelwand zugeführt, dabei sind für eine wirksame Behandlungstemperatur von bis zu 400°C Wandtemperaturen von bis zu 600°C erforderlich. Bei dieser hohen Temperatur bewirkt das bei der Behandlung entstehende Chlor die Korrosion der Einrichtung und in der Flugasche vorhandene niedrigschmelzende Salze können Anbackungen bilden, die zur Blockierung oder Verstopfung der Anlage führen können. In der Praxis muss die Trommel mit einer Brüdenabsaugeeinrichtung versehen werden, deren Filter regelmässig verstopft.

Aus DE-A-37 44 287 ist eine Vorrichtung bekannt, um organische Abfälle zu entgasen und weitestgehend zu dechlorieren. Dabei wird der Effekt zu Nutze gemacht, dass chlorierte Kohlenwasserstoffe im Temperaturbereich zwischen 300 und 400°C bei der Anwesenheit von Katalysatoren und einer reduzierenden Atmosphäre dechloriert und teilweise auch abgebaut werden. Um die Flugasche in der indirekt beheizten Transporteinrichtung auf eine Behand= lungstemperatur von 300°C bis 400°C aufzuwärmen wäre eine Zeitdauer von Stunden notwendig, wobei die Temperaturverteilung in der Flugasche auf Grund der schlechten Wärmeleitfähigkeit zudem nicht homogen ausfallen würde.

Aufgabe der vorliegenden Erfindung ist es, ein Verfahren und eine Vorrichtung zur thermischen Behandlung von bei der Rauchgasreinigung anfallenden Stäuben und feinteiligen Feststoffen vorzuschlagen, das einen unterbruchslosen, kontinuierlichen Betrieb bei möglichst niedriger Anlagetemperatur gewährleistet.

Diese Aufgabe wird durch die Merkmale des kennzeichnenden Teils von Anspruch 1 und Anspruch 13 gelöst. Bevorzugte Ausführungsformen der Erfindung bilden den Gegenstand der Ansprüche 2 bis 12 und 14 bis 17.

Im erfindungsgemässen Verfahren wird die thermische Behandlung des staubförmigen und/oder feinteiligen Feststoffs während des pneumatischen Transports des Feststoffs ausgeführt. Dabei dient das mit jedem individuellen Staubkorn und Feststoffteil in Berührung kommende, auf die gewünschte Temperatur vorgewärmte, strömende Transportmedium gleichzeitig als Wärmequelle, d.h. als Behandlungsmedium. Folglich kommen der behandelte Feststoff und die entstehenden Gase während der ganzen Behandlung nicht mit Vorrichtungsteilen mit unerwünscht hohen Temperaturen in Berührung. Infolge der pneumatischen Förderung besteht auch kaum Verstopfungsgefahr. Einer allfälligen Verstopfung kann durch periodische Reinigung der Rohrleitung mit einem ringförmigen Reinigungsstössel ohne Unterbruch der Gaszuführung vorgebeugt werden. Da die vorbestimmte Transportstrecke gleichzeitig Behandlungsstrecke ist, kann die Vorrichtung klein und wirtschaftlich gehalten werden. Am Ende der Transport-/Behandlungsstrecke wird der Feststoff vom Gasstrom durch Filtrieren getrennt, worauf der feststofffreie Gasstrom erneut als Transport-/Behandlungsmedium benützt werden kann. Dieser Gasstrom führt die gasförmige Produkte der thermischen Behandlung automatisch aus dem Behandlungsbereich weg.

An die thermische Behandlung kann je nach Bedarf eine stationäre Nachbehandlung bei etwa der Behandlungstemperatur, im allgemeinen über 300°C, vorzugsweise über 400°C, erfolgen. Die Nachbehandlung kann mindestens 2, vorzugsweise länger als 4 Stunden dauern. Sie erfolgt zweckmässig unter einer Inertgasatmosphäre.

Der Druck im System kann leicht über ein Gebläse gesteuert werden, so dass ein unerwünschter Luft- und damit Sauerstoffeintritt problemlos verhindert werden kann. Die Sauerstoffkonzentration sollte 3% nicht überschreiten.

Als erfindungsgemäss zu behandelnde staubförmige und/oder feinteilige Feststoffe aus der Rauchgasreinigung sind beispielsweise Flugasche, getrocknete Salze aus der Rauchgasreinigungsanlage einer Müllverbrennungsanlage (Wäschersalze) und mit umweltschädlichen Stoffen beladene Adsorbtionsmaterialien zu nennen.

Die Erfindung wird anhand der einzigen Figur und der Beispiele weiter veranschaulicht.

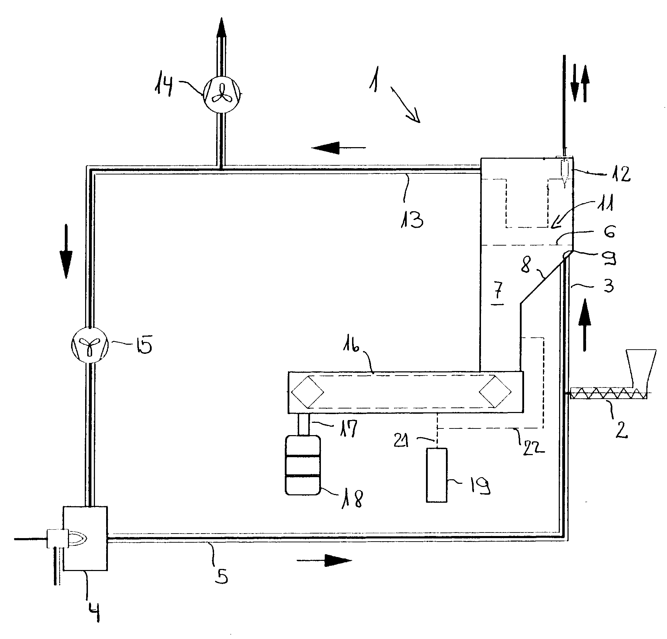

Fig. 1 zeigt rein schematisch eine Vorrichtung zur Durchführung des erfindungsgemässen Verfahrens.

Die in Fig. 1 dargestellte erfindungsgemässe Vorrichtung 1 zur Durchführung der erfindungsgemässen thermischen Behandlung besitzt eine Schneckendosiereinrichtung 2, die in eine vertikale Rohrleitung 3 mündet. Die vertikale Rohrleitung 3 bildet gleichzeitig eine von unten nach oben verlaufende, gerade Transportstrecke und einen Behandlungsraum für die staubförmigen und/oder feinteiligen Feststoffe. Sie ist die Fortsetzung einer horizontalen Rohrleitung 5, der eine Brennkammer 4 vorgeschaltet ist. Anstelle eines Brenners kann die Erwärmung des Gassstromes auch elektrisch erfolgen. Selbsverständlich sind alle Rohrleitungen in dieser Vorrichtung isoliert. Die vertikale Rohrleitung 3 mündet frei vor einem Filter 6 in einen isolierten beheizbaren Verweilraum 7, in dem die Nachbehandlung stattfindet. Der Filter 6 bildet den oberen horizontalen Abschluss des Verweilraumes 7 und ist mit (nicht dargestellten) keramischen Filterkerzen bestückt. Die Einmündung 9 der vertikalen Rohrleitung 3 in den Verweilraum 7 befindet sich in einer nach aussen geneigten Wand 8 des Verweilraums, derart, dass zwischen dem Filter 6 und dem Verweilraum 7 keine Verengung vorliegt. An der geneigten Wand 8 ist ein (nicht dargestellter) Vibrator vorgesehen. An der Reinseite 11 des Filters 6 ist eine Abreinigungvorrichtung 12 für die vertikale Rohrleitung 3 angeordnet. Sie ist als ringförmiger Stössel ausgebildet und erlaubt deshalb die Weiterführung des Gasstromes auch während des Reinigungsvorganges. An der Reinseite 11 des Filters 6 schliesst eine weitere Rohrleitung 13 an, die mit einem Abgasgebläse 14 und einem der Brennkammer 4 vorgeschalteten Umwälzgebläse 15 in Verbindung steht. Mittels des Abgasgebläses 14 wird ein Teil des zirkulierenden Gasstromes entnommen. Dieser Teilstrom entspricht der über dem Gasbrenner der Brennkammer eingeführten Gasmenge.

An den unteren Teil des Verweilraumes 7 schliesst eine Austragsvorrichtung 16, hier ein Trogkettenförderer, für den thermisch behandelten Feststoff an. Der Auslass 17 der Austragsvorrichtung 16 mündet, gewünschtenfalls luftdicht, in einen Lagerbehälter 18. Weiterhin ist ein Inertgasvorrat 19 vorgesehen, der Anschlussleitungen 21, 22 zum Verweilraum 7 und zur Austragsvorrichtung 16 besitzt.

Ausser von unten nach oben, wie in der Figur dargestellt, kann die Transportstrecke in jeder beliebigen Richtung, z.B. horizontal, insbesondere von oben nach unten verlaufen.

Die nachfolgenden Beispiele können mit der Vorrichtung gemäss Fig. 1 ausgeführt werden.

### Beispiel 1

### Thermische Behandlung von Flugasche zur Zerstörung von chlorierten Kohlenwasserstoffen.

In einer mit einem Propangasbrenner bestückten Brennkammer wird ein von Flugasche gereinigter Rauchgasstrom aus einer Müllverbrennungsanlage auf 480°C bis 500°C erwärmt. Dieser Gasstrom gelangt durch eine isolierte Rohrleitung in einen ebenfalls isolierten vertikalen Rohrleitungsabschnitt. Mittels eines Schneckendosiergerätes wird die zu behandelnde Flugasche in diesen vertikalen Rohrabschnitt kontinuierlich eindosiert. An der Dosierstelle beträgt die Gasgeschwindigkeit ca. 12 m/sek. Die Flugasche wird pneumatisch im vertikalen Rohrleitungsabschnitt über eine Strecke von mindestens 2,5 m zu einem Filter gefördert. Während der Förderung wird die Flugasche auf 400°C oder höher erwärmt.

Der Filter weist temperaturbeständige keramische Filterkerzen auf, an denen die Flugasche bei einer Temperatur von 400°C oder höher abgeschieden wird. Die abgeschiedene Flugasche gelangt vom Filter direkt in einen darunter angeordneten Verweilraum, in dem mit Stickstoff oder Kohlendioxyd eine Inertgasatmosphäre aufrecht erhalten wird.

Die vom Rauchgas abgetrennte Flugasche verbleibt im auf 400°C beheizten und isolierten Verweilraum während 4 Stunden. Das Austragen der Flugasche nach dieser Verweilzeit erfolgt mittels eines geeigneten Austragungssystems, z.B. eines Trogkettenförderers, eines gekühlten Schneckenförderers oder einer Kühltrommel, niveaugesteuert. Die Kühlung des Materials beim Austragen auf eine Temperatur von unterhalb 200°C ist erwünscht, um eine Neubildung der chlorierten Kohlenwasserstoffe zu verhindern. Die Kühlung kann auch durch Abschrecken erfolgen. Während des Austragbetriebes wird auch ein an einer nach aussen geneigten Wand des Verweilraumes angeordneter Vibrator betrieben.

Ein Teil des Gasstromes wird dem Kreislauf entnommen, der grösste Teil wird jedoch mittels eines Umwälzgebläses erneut der Brennkammer zugeführt.

Die Sauerstoffkonzentration im ganzen System ist auf 2 bis 3% eingestellt, um die Zerstörung der chlorierten, insbesondere aromatischen, Kohlenwasserstoffe zu gewährleisten. Vor der Dosiereinrichtung ist deshalb eine Sauerstoffmesseinrichtung eingebaut. Während des Verfahrens werden ebenfalls erfasst: die Durchflussmenge des Rauchgases, dessen Temperatur vor und nach der Zudosierung des Feststoffes, die Temperatur im Filter und der Druckverlust über dem Filter. Der Filter kann wahlweise in Abhängigkeit vom Druckabfall oder periodisch abgereinigt werden.

### Beispiel 2

### Thermische Behandlung von Wäschersalz zur Austreibung von Ammoniak.

Zur Reduktion von unerwünschten Stickoxyden im Rauchgas wird letzteren Ammoniak zugegeben. Die überschüssige Ammoniakmenge wird in einem Wäscher aus dem Rauchgas entfernt. Die Wäscherflüssigkeit wird sprühgetrocknet, wobei das sogenannte Wäschersalz als trockenes staubförmiges Produkt anfällt. In diesem Wäschersalz liegt das Ammoniak als Ammoniumsalz vor und kann durch Erhitzen, vorzugsweise auf Temperaturen von über 300°C, freigesetzt werden.

Das Wäschersalz wird auf dieselbe Art und Weise wie im Beispiel 1 beschrieben behandelt. Dabei werden jedoch tiefere Temperaturen angewendet und die Austragung des behandelten Wäschersalzes nach dem Filtrieren kann ohne Verweilzeit erfolgen. Das ausgetriebene Ammoniak wird weiterverwendet, vorzugsweise durch Lösen des gasförmigen Ammoniaks in Wasser, z.B. in einem Gaswäscher. Die erhaltene Lösung wird von allfällig vorhandenem Quecksilber mittels eines Ionenaustauschers befreit und erneut der Stickoxidreduktion zugeführt.

Wenn beim Austreiben von Ammoniak gleichzeitig chlorierte Kohlenwasserstoffe zu zerstören sind, erfolgt die Behandlung gemäss Beispiel 1.

### Beispiel 3

### Thermische Behandlung von Aktivkohle zur Zerstörung von chlorierten Kohlenwasserstoffen und Entfernung von Ammoniak.

Zur Entfernung von chlorierten Kohlenwasserstoffen aus dem Rauchgas einer Müllverbrennungsanlage wird Aktivkohle oder Aktivkoks in den Rauchgastrom eingeblasen. Diese Aktivkohle oder Aktivkoks, die/der mit den unerwünschten Stoffen, insbesondere chlorierten Kohlenwasserstoffen, beladen ist, werden aus dem Rauchgasstrom ausgeschieden.

Vor dem Deponieren müssen Aktivkohle und Aktivkoks thermisch behandelt werden, damit die chlorierten Kohlenwasserstoffe zerstört werden können. Bei dieser Behandlung kann gegebenenfalls vorhandenes Ammoniak auch zurückgewonnen werden.

Die Behandlung erfolgt nach dem im Beispiel 1 beschriebenen Verfahren, wobei dem Sauerstoffgehalt wegen der Brennbarkeit von Aktivkohle, bzw. Aktivkoks eine besonders grosse Aufmerksamkeit geschenkt wird. Die Sauerstoffkonzentration soll vorzugsweise weniger als 2% betragen. Um den Eintritt von Luft auf jeden Fall zu vermeiden, wird im Heissgasfilter ein leichter, reinigungsseitiger Überdruck aufrechterhalten.

Die Reinigung der Filterkerzen erfolgt aus demselben Grund mittels Inertgas.

## Patentansprüche

1. Verfahren zur thermischen Behandlung von staubförmigen und/oder feinteiligen Feststoffen, die bei der Reinigung von Rauchgasen, insbesondere von Müllverbrennungsanlagen, anfallen, dadurch gekennzeichnet, dass man die staubförmigen und/oder feinteiligen Feststoffe mittels eines Gasstromes, welcher mindestens die zur thermischen Behandlung der staubförmigen und/oder feinteiligen Feststoffe erforderliche Temperatur aufweist, erwärmt und entlang einer vorbestimmten Transportstrecke einer Filtereinrichtung zuführt und nach dem Filtrieren den staubförmigen und/oder feinteiligen Feststoff austrägt.

2. Verfahren nach Anspruch 1, dadurch gekennzeichnet, dass man den Gasstrom im Kreis führt.

3. Verfahren nach einem der vorangehenden Ansprüche, dadurch gekennzeichnet, dass man als Gasstrom das von der Flugasche befreite Rauchgas verwendet.

4. Verfahren nach einem der vorangehenden Ansprüche, dadurch gekennzeichnet, dass man durch die thermische Behandlung halogenierte, insbesondere aromatische, Kohlenwasserstoffe in den staubförmigen und/oder feinteiligen Feststoffen zerstört, wobei man an die thermische Behandlung im Anschluss an das Filtrieren eine thermische Nachbehandlung in stationärem Zustand folgen lässt.

5. Verfahren nach Anspruch 4, dadurch gekennzeichnet, dass man die thermische Nachbehandlung im Anschluss an das Filtrieren durch Verweilen bei Behandlungstemperatur unter einer Inertgasatmosphäre durchführt.

6. Verfahren nach Anspruch 4 oder 5, dadurch gekennzeichnet, dass man die staubförmigen und/oder feinteiligen Feststoffe auf über 300°C, vorzugsweise über 400°C, erwärmt und anschliessend die thermische Nachbehandlung während mindestens 2, vorzugsweise über 4 Stunden bei derselben Temperatur durchführt.

7. Verfahren nach Anspruch 6, dadurch gekennzeichnet, dass man die staubförmigen und/oder feinteiligen Feststoffe nach der thermischen Behandlung, während des Austragens unter einer Inertgasatmosphäre hält.

8. Verfahren nach einem der vorangehenden Ansprüche, dadurch gekennzeichnet, dass man die thermische Behandlung bei einer Sauerstoffkonzentration von höchstens 3% durchführt.

9. Verfahren nach einem der vorangehenden Ansprüche, dadurch gekennzeichnet, dass man die staubförmigen und/oder feinteiligen Feststoffe nach der thermischen Behandlung abschreckt.

10. Verfahren nach einem der vorangehenden Ansprüche, dadurch gekennzeichnet, dass man durch die thermische Behandlung flüchtige Bestandteile, insbesondere Ammoniak, aus den staubförmigen und/oder feinteiligen Feststoffen entfernt.

11. Verfahren nach Anspruch 10, dadurch gekennzeichnet, dass man die thermische Behandlung bei über 300°C durchführt.

12. Verfahren nach Anspruch 10 oder 11, dadurch gekennzeichnet, dass man das gewonnene gasförmige Ammoniak in Wasser löst, aus der erhaltenen wässrigen Lösung mittels eines Ionenaustauschers vorhandenes Quecksilber entfernt und die quecksilberfreie wässrige Ammoniaklösung dem Rauchgas der Müllverbrennungsanlage zur Reduktion von Stickoxiden zuführt.

13. Vorrichtung zur Durchführung des Verfahrens nach einem der vorangehenden Ansprüche, gekennzeichnet durch eine mit einem Gebläse (15) und einer Heizeinrichtung (4) für das Gas in Verbindung stehende Rohrleitung (3), die gleichzeitig Transportstrecke und Behandlungsraum für den staubförmigen und/oder feinteiligen Feststoff bildet, in deren einem Endbereich eine Zuführeinrichtung (2) für den Feststoff mündet und an deren anderes Ende eine Filtereinrichtung (6) mit Filtern aus temperaturbeständigem Material folgt.

14. Vorrichtung nach Anspruch 13, dadurch gekennzeichnet, dass im Anschluss an die Filtereinrichtung (6) ein Verweilraum (7) angeordnet ist, wobei die Filtereinrichtung vorzugsweise den Abschluss eines Verweilraumes (7) für die thermische Nachbehandlung bildet.

15. Vorrichtung nach Anspruch 13 oder 14, dadurch gekennzeichnet, dass die Rohrleitung (3) vor der Filtereinrichtung (6) frei in den Verweilraum (7) mündet.

16. Vorrichtung nach einem der Ansprüche 13 bis 15, dadurch gekennzeichnet, dass sie eine Reinigungseinrichtung (12) in Form eines Ringstössels für die Rohrleitung (3) besitzt.

17. Vorrichtung nach einem der Ansprüche 13 bis 16, dadurch gekennzeichnet, dass die Rohrleitung (3) vertikal angeordnet ist, wobei die Zuführeinrichtung in ihren oberen Endbereich mündet und die Filtereinrichtung an ihr unteres Ende folgt.

## Claims

1. A method for the heat treatment of pulverulent and/or finely divided solids which are produced in the purification of flue gases, in particular from refuse incineration plants, characterized in that the pulverulent and/or finely divided solids are heated and fed to a filtering apparatus along a predetermined conveyance path by means of a gas flow having at least the heat treatment temperature, and that after the filtering, the pulverulent and/or finely divided solid matter is removed.

2. A method according to claim 1, characterized in that the gas flow is carried in a circle.

3. A method according to one of the preceding claims, characterized in that the flue gas cleared of the fly ash is used as the gas flow.

4. A method according to one of the preceding claims, characterized in that halogenated, in particular aromatic hydrocarbons, are destroyed in the pulverulent and/or finely divided solids by the heat treatment, in which process the heat treatment is followed after the filtering by a thermal aftertreatment in a stationary state.

5. A method according to claim 4, characterized in that, following the filtering, the thermal aftertreatment is effected by means of a residence at the treatment temperature in an inert gas atmosphere.

6. A method according to claim 4 or 5, characterized in that the pulverulent and/or finely divided solids are heated to over 300°C, preferably over 400°C, and that subsequently, the thermal aftertreatment is effected over two, preferably over four hours at the same temperature.

7. A method according to claim 6, characterized in that the pulverulent and/or finely divided solids are kept after the thermal aftertreatment in an inert gas atmosphere during their removal.

8. A method according to one of the preceding claims, characterized in that the heat treatment is effected at an oxygen concentration of at most 3%.

9. A method according to one of the preceding claims, characterized in that the pulverulent and/or finely divided solids are quenched after the heat treatment.

10. A method according to one of the preceding claims, characterized in that volatile constituents, in particular ammonia, are removed from the pulverulent and/or finely divided solids by means of the heat treatment.

11. A method according to claim 10, characterized in that the heat treatment is effected at over 300°C.

12. A method according to claim 10 or 11, characterized in that the gaseous ammonia obtained is dissolved in water, that mercury is removed by means of an ion exchanger from the aqueous solution obtained, and the mercury-free aqueous ammonia solution is fed to the flue gas of the refuse incineration plant for reducing nitrogen oxides.

13. An apparatus for operating the method according to one of the preceding claims, characterized by a pipeline (3) connected to a fan (15) and a heating appliance (4) for the gas, which pipeline forms at the same time the conveyance path and the treatment space for the pulverulent and/or finely divided solid matter, into one end zone whereof there leads a feeder device (2) for the solid matter, and whose other end is followed by a filtering apparatus (6) with filters made of a material capable of withstanding high temperatures.

14. An apparatus according to claim 13, characterized in that following the filtering apparatus (6), a residence space (7) is arranged, in which arrangement the filtering apparatus preferably forms the end of a residence space (7) for the thermal aftertreatment.

15. An apparatus according to claim 13 or 14, characterized in that the pipeline (3) freely issues into the residence space (7) ahead of the filtering apparatus (6).

16. An apparatus according to one of claims 13 to 15, characterized in that it has a cleaning device (12) for the pipeline (3) in the form of an annular plunger (12).

17. An apparatus according to one of claims 13 to 16, characterized in that the pipeline (3) is arranged vertically, in which arrangement, the feeder device leads into its upper end zone, and the filtering apparatus follows at its bottom end.

## Revendications

1. Procédé pour le traitement thermique de matières solides en forme de poudre et/ou finement divisées, séparées lors de la purification de gaz de fumée, en particulier d'installations d'incinération d'ordures ménagères, caractérisé en ce que l'on chauffe les matières solides en forme de poudre et/ou finement divisées au moyen d'un courant gazeux, lequel présente au moins la température nécessaire pour le traitement thermique des matières solides en forme de poudre et/ou finement divisées, le long d'un trajet de transport déterminé dans une installation de filtration et en ce que l'on évacue, après filtration, la matière solide en forme de poudre et/ou finement divisée.

2. Procédé selon la revendication 1, caractérisé en ce que l'on conduit le courant gazeux en cercle.

3. Procédé selon l'une des revendications précédentes, caractérise en ce que l'on utilise comme courant gazeux le gaz de fumée libéré de la cendre volante.

4. Procédé selon l'une des revendications précédentes, caractérisé en ce que l'on détruit par le traitement thermique des hydrocarbures halogénés, en particulier aromatiques, dans les matières solides en forme de poudre et/ou finement divisées, le traitement étant tel que l'on fait suivre le traitement thermique, à la suite de la filtration, d'un post-traitement thermique à l'état stationnaire.

5. Procédé selon la revendication 4, caractérisé en ce que l'on effectue le posttraitement thermique à la suite de la filtration, par un séjour à la température de traitement sous une atmosphère de gaz inerte.

6. Procédé selon la revendication 4 ou 5, caractérisé en ce que l'on chauffe les matières solides en forme de poudre et/ou finement divisées au-dessus de 300 °C, de préférence au-dessus de 400 °C, et en ce que l'on effectue ensuite le post-traitement thermique pendant au moins 2 heures, de préférence pendant plus de 4 heures, à la même température.

7. Procédé selon la revendication 6, caractérisé en ce que l'on maintient les matières solides en forme de poudre et/ou finement divisées sous une atmosphère de gaz inerte après le traitement thermique, pendant l'évacuation.

8. Procédé selon l'une des revendications précédentes, caractérisé en ce que l'on effectue le traitement thermique à une concentration d'oxygène d'au plus 3 %.

9. Procédé selon l'une des revendications précédentes, caractérisé en ce que l'on refroidit brusquement les matières solides en forme de poudre et/ou finement divisées après le traitement thermique.

10. Procédé selon l'une des revendications précédentes, caractérisé en ce que l'on élimine des matières solides en forme de poudre et/ou finement divisées, par le traitement thermique, des constituants volatils, en particulier de l'ammoniac.

11. Procédé selon la revendication 10, caractérisé en ce que l'on effectue le traitement thermique à plus de 300 °C.

12. Procédé selon la revendication 10 ou 11, caractérisé en ce qu'on dissout l'ammoniac gazeux obtenu dans de l'eau, en ce qu'on élimine le mercure présent de la solution aqueuse obtenue, au moyen d'un échangeur d'ions, et en ce qu'on amène la solution aqueuse d'amoniac dépourvue de mercure au gaz de fumée de l'installation d'incinération d'ordures ménagères pour la réduction des oxydes d'azote.

13. Installation pour mettre en oeuvre le procédé selon l'une des revendications précédentes, caractérisée par une conduite tubulaire (3) en liaison avec un ventilateur (15) et un dispositif de chauffage (4) pour le gaz, qui forme en même temps le trajet de transport et la chambre de traitement pour les matières solides en forme de poudre et/ou finement divisée, un dispositif d'introduction (2) de la matière solide étant disposé dans une zone terminale de la conduite tubulaire et un dispositif de filtration (6) étant disposé à l'autre extrémité de la conduite tubulaire, ce dispositif de filtration ayant des filtres en une matière résistant à la température.

14. Installation selon la revendication 13, caractérisée en ce qu'une chambre de séjour (7) est disposée en communication avec le dispositif de filtration (6), le dispositif de filtration formant de préférence la fermeture d'un dispositif de séjour (7) pour le post-traitement thermique.

15. Installation selon la revendication 13 ou 14, caractérisée en ce que la conduite tubulaire (3) débouche librement dans la chambre de séjour (7) avant le dispositif de filtration (6).

16. Installation selon l'une des revendications 13 à 15, caractérisée en ce qu'elle comporte un dispositif de purification (12) sous forme d'un anneau poussoir pour la conduite tubulaire (3).

17. Installation selon l'une des revendications 13 à 16 caractérisée en ce que la conduite tubulaire (3) est disposée verticalement, le dispositif d'alimentation débouchant dans sa zone finale supérieure et le dispositif de filtration étant disposé à la suite de son extrémité inférieure.
